# EUROPÄISCHE PATENTANMELDUNG

(11) **EP 1 400 713 A2**
(43) Veröffentlichungstag der Anmeldung: **24.03.2004**
(21) Anmeldenummer: 03400055.4
(22) Anmeldetag: 22.09.2003
(51) Int. Cl.: F16C 35/063

(54) **Einpassring**

(30) Priorität: 20.09.2002 DE 10243987; 22.09.2003 DE 10344220
(71) Anmelder: ROBERT BOSCH GMBH, 70442 Stuttgart (DE)
(72) Erfinder: Hoefs, Roland, 74354 Besigheim (DE)

(57) **Zusammenfassung**

Es wird ein Einpassring 10 zur Montage in Naben, insbesondere Naben elektrischer Maschinen, vorgeschlagen. Der Einpassring 10 hat ein Hülsenteil 13 zur Aufnahme eines Lagers, das so ausgebildet ist, dass ein Federelement 24 unverlierbar im Hülsenteil 13 montierbar ist.

## Beschreibung

### Stand der Technik

Die Erfindung betrifft einen Einpassring zur Montage in Naben, insbesondere von Naben elektrischer Maschinen, nach der Gattung des unabhängigen Patentanspruchs.
Aus der deutschen Offenlegungsschrift DE 19804328 A1 ist ein Einpassring bekannt, der ein Hülsenteil zur Aufnahme eines Lagers aufweist. In diesem Hülsenteil ist einerseits das Lager aufgenommen und andererseits mehrere Federelemente, die bei der Endmontage des dort offenbarten Generators mittels einer Krallen aufweisenden Federscheibe in der Nabe eines Lagerschilds gehalten sind. Bei dieser Ausführung ist nachteilig, dass die einzelnen Federelemente erst während der Endmontage in die Nabe bzw. den Einpassring eingesetzt werden und dementsprechend nicht vormontiert sind. Der Fertigungsprozess ist unnötig kompliziert, ein Verlust eines Federelements im Zusammenhang mit der Montage kann nicht ausgeschlossen werden.

### Vorteile der Erfindung

Der erfindungsgemäße Einpassring zur Montage in Naben mit den Merkmalen des Hauptanspruchs hat den Vorteil, dass der Einpassring mit dem Federelement parallel zur eigentlichen Montage der elektrischen Maschine vorgefertigt und vormontiert werden kann. Ein separates Einfügen des Federelements in die Nabe des nahezu vollständig montierten Generators ist nicht mehr erforderlich. Darüber hinaus ermöglicht diese Art Einpassring das Drehen und Wenden der elektrischen Maschine während des Fertigungsvorgangs nach dem das entsprechende Lagerschild mit dem Einpassring über das Lager geschoben ist. Das Federelement kann nicht verloren werden.

Durch die in den Unteransprüchen aufgeführten Maßnahmen sind vorteilhafte Weiterbildungen des Einpassrings nach dem Hauptanspruch möglich. Die Funktion, das Federelement unverlierbar im Hülsenteil montieren zu können bzw. montiert zu haben, wird auf einfache Weise dadurch erreicht, indem das Hülsenteil zumindest zwei Hinterschnitte aufweist, die zum Halten des Federelements dienen. Von diesen zumindest zwei Hinterschnitten ist in einem geeigneten Ausführungsbeispiel zumindest ein erster Hinterschnitt durch eine Nut gebildet. Eine solche Nut lässt sich besonders günstig durch ein Spritzgussverfahren herstellen.

Ist zumindest ein zweiter Hinterschnitt, einer der mindestens zwei Hinterschnitte, durch einen Haken gebildet, so lässt sich das Federelement auf einfache Weise unter Aufbringung von nur geringer Verformungsarbeit auf das Federelement in das Hülsenteil einsetzen. Das Montieren ist umso einfacher, wenn der zumindest eine Haken Teil einer Schnappverbindung ist, die einerseits aus dem Haken und andererseits aus dem Federelement gebildet ist.

Es ist vorgesehen, dass das Federelement an seiner radialen Außenseite Zapfen aufweist, durch die vorteilhafterweise ein Verdrehen des Federelements im Hülsenteil verhindert wird. Es ergibt sich daraus ein peripherer Formschluss, der zur Folge hat, dass nur sehr geringe oder keine Torsionsmomente auf das Federelement wirken. Die Belastung für das Federelement ist dadurch verringert, dessen Zuverlässigkeit im Betrieb gesteigert.

Damit das Federelement auf eine ganz bestimmte definierte Art und Weise eine Axialkraft auf das in das Hülsenelement einzusetzende bzw. eingesetzte Lager aufbringt, ist vorgesehen, dass das Federelement nur in einer einzigen Position in das Hülsenteil montierbar ist. Andernfalls bestünde die Gefahr, dass auf das Lager zu große axiale Kräfte wirken, das dadurch möglicherweise frühzeitig ausfiele.

### Zeichnungen

In den Zeichnungen sind Ausführungsbeispiele eines erfindungsgemäßen Einpassrings dargestellt.

Es zeigen:
- Figur 1: in einer Schnittansicht ein erstes Ausführungsbeispiel eines Einpassrings,
- Figur 2: eine Stirnansicht des Einpassrings aus Figur 1,
- Figur 3: ein zweites Ausführungsbeispiel eines Einpassrings in einer Schnittdarstellung,
- Figur 4: ein drittes Ausführungsbeispiel eines Einpassrings mit einem Federelement,
- Figur 5: eine Stirnansicht des in Figur 4 dargestellten Federelements,
- Figur 6: eine Stirnansicht auf ein weiteres Ausführungsbeispiel eines Einpassrings.

### Beschreibung

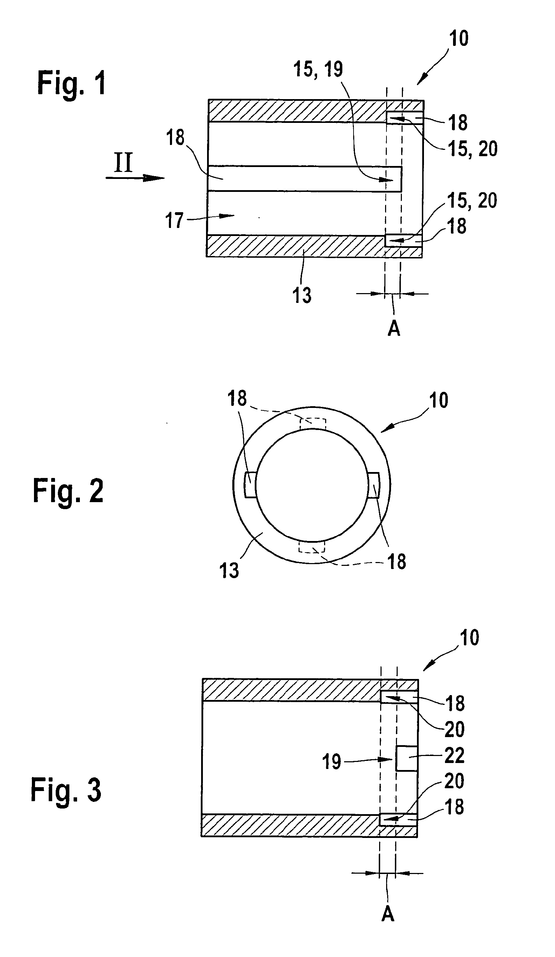

In Figur 1 ist eine Schnittdarstellung ein Einpassring 10 dargestellt. Dieser Einpassring 10 besteht aus einem Hülsenteil 13 zur Aufnahme eines nicht dargestellten Lagers. Das Hülsenteil 13 weist in dem in den Figuren 1 und 2 dargestellten Ausführungsbeispiel insgesamt vier Hinterschnitte 15 auf, von denen in Figur 1 drei dargestellt sind. Die Hinterschnitte im Hülsenteil 13 kommen dadurch zustande, dass im zylindrischen Inneren 17, Nuten 18 eingearbeitet sind, die an ihrem geschlossenen Ende die Hinterschnitte 15 bzw. erste und zweite Hinterschnitte 19 und 20 bilden. Die ersten und zweiten Hinterschnitte 19 und 20 unterscheiden sich jeweils dadurch, dass ihre Wirkung jeweils aneinander entgegengesetzt ist. Bezogen auf Figur 1 bedeutet dies, dass die ersten Hinterschnitte 19 einen Hinterschnitt 15 mit einer Wirkung in einer ersten axialen Richtung bilden, wobei dies bedeutet, dass der erste Hinterschnitt 19 einen Anschlag nach rechts begrenzt. Im umgekehrten Fall gilt dies für die zweiten Hinterschnitte 20, die in Figur 1 einen Anschlag nach links begrenzen und dem zu Folge einen Anschlag in einer zweiten axialen Richtung bilden. Im Ausführungsbeispiel nach Figur 1 werden sowohl der erste Hinterschnitt 19 als auch der zweite Hinterschnitt 20 durch je eine Nut 18 gebildet. Desweiteren ist vorgesehen, dass sich in der Seitenansicht, wie in Figur 1 dargestellt, die Nuten 18 jeweils so weit erstrecken, dass es einen gemeinsamen axialen Abschnitt A gibt, über den sich die Nuten gemeinsam erstrecken. Der Abschnitt A entspricht in diesem Fall etwas mehr als der Materialstärke eines einzusetzenden Federelements. Ein gemeinsamer axialer Abschnitt A ist nicht erforderlich, jedoch wünschenswert, um ein am Außenumfang möglichst ebenes Federelement einsetzen zu können.

Die Nuten 18 sind derart ausgebildet, dass diese auf die Naben- bzw. Zylinderachse des Einpassrings 10 bezogen einerseits in eine Richtung einen Anschlag bzw. Hinterschnitt 19 oder 20 bilden und andererseits in die jeweils entgegengesetzte Richtung offen sind und somit in einer der beiden axialen Stirnflächen des Einpassrings 10 enden.

Figur 2 zeigt wie in Figur 1 angegeben die entsprechende axiale Ansicht auf den Einpassring 10. Hier ist deutlich die in diesem Fall regelmäßige Anordnung der Nuten 18 über den Umfang des Hülsenteils 13 dargestellt.

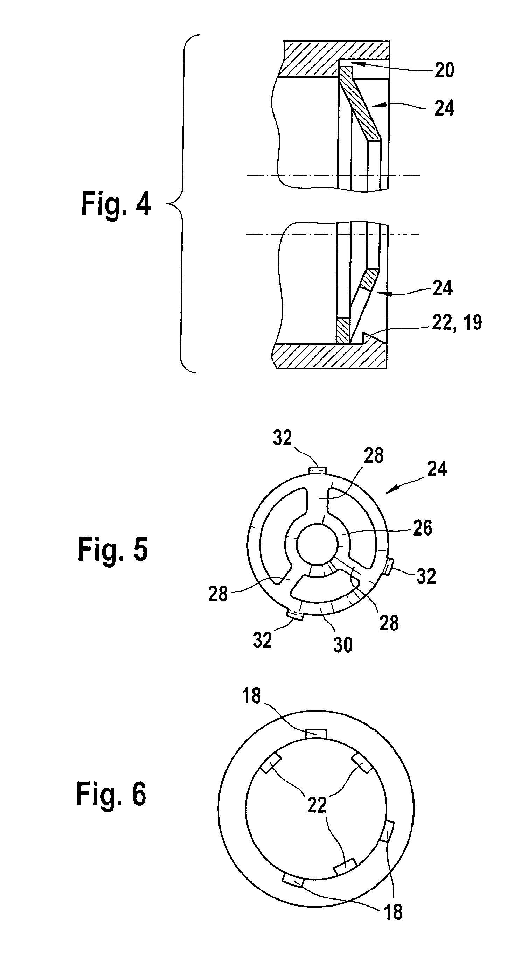

In Figur 3 ist ein weiteres Ausführungsbeispiel des Einpassrings 10 dargestellt. Bei diesem Ausführungsbeispiel sind die zweiten Hinterschnitte 20 wiederum durch Nuten 18 gebildet. Der erste Hinterschnitt 19 ist hier jedoch nicht mehr mittels einer Nut 18 gebildet, sondern mittels eines Hakens 22. Dieser Haken 22, ein solcher Haken 22 ist auch in Figur 4 dargestellt, erhebt sich aus dem zumindest im Wesentlichen zylindrischen Inneren 17 nach radial innen und stellt somit einen mechanischen Widerstand für ein in das Innere 17 eingesetztes Federelement dar, das einen entsprechenden, dem Innendurchmesser des Inneren 17 angepassten Außendurchmesser aufweist. Wie in Figur 4 dargestellt, ist vorgesehen, den Haken 22 mit einer Schräge zu versehen, so dass das Einführen des Federelements 24 in das Innere 17 des Hülsenteils 13 vereinfacht ist. Dazu ist die Schräge so ausgebildet, dass sie in Richtung zu einem Ende des Einpassrings 10 die Öffnung des Inneren 17 erweitert. Dieser Haken 22 ist in Zusammenwirkung mit dem Federelement 24 somit Teil einer Schnappverbindung.

Figur 4 zeigt eine Einbaulage eines Federelements 24 zwischen den ersten und zweiten Hinterschnitten 19 und 20.

Das in Figur 4 dargestellte Federelement 24 ist näher in Figur 5 dargestellt. Das Federelement 24 weist zunächst einen inneren Ringbereich 26 auf, mit dem das Federelement 24 sich beispielsweise an einem Nabenteil abstützen kann. Von diesem inneren Ringbereich 26 gehen in diesem Fall drei Streben 28 aus, die den inneren Ringbereich 26 mit einem äußeren Ringbereich 30 einstückig verbinden. Vom äußeren Ringbereich 30 gehen an dessen Umfang in diesem Fall drei Zapfen 32 aus, die dazu geeignet sind, in die entsprechenden Nuten 18 des Einpassrings 10 in Figur 6 eingesetzt zu werden. Die Zapfen 32 liegen schließlich an den zweiten, durch die Nuten 18 gebildeten Hinterschnitten 20, sowie mit ihrem äußeren Ringbereich 30 an den ersten Hinterschnitten 19, die durch die Haken 22 gebildet sind. Mit den Zapfen 32 an der radialen Außenseite des Federelements 24 wird dadurch ein Verdrehen des Federelements 24 im Hülsenteil 13 verhindert. Darüber hinaus ist durch die unregelmäßige Anordnung der Zapfen 32 am Außenumfang des Federelements 24 und der unregelmäßigen Anordnung der Nuten 18 am Innenumfang des Hülsenteils 13 das Montieren des Federelements 24 in das Hülsenteil 13 nur in einer einzigen Position möglich. Dadurch wird insbesondere bei dem in Figur 4 dargestellten konischen Federelement 24 vermieden, dass das Federelement 24 falsch herum in das Hülsenteil 13 bzw. den Einpassring 10 eingebaut werden kann.

Durch den hier beschriebenen einstückigen Einpassring 10 zur Montage in Naben, insbesondere von Naben elektrischer Maschinen, der ein aus Kunststoff gegossenes Teil ist, ist es möglich, in das Hülsenteil 13 ein Federelement 24 einzusetzen und zu montieren, so dass das Federelement 24 im entsprechend ausgebildeten Hülsenteil 13 ohne weitere Bauteile unverlierbar ist. Dazu sind zumindest zwei Hinterschnitte 15 erforderlich, die zum Halten des Federelements dienen. Für die Montage einer elektrischen Maschine ist es besonders sinnvoll Einpassringe 10 anzuliefern, in denen das Federelement 24 wie in den zuvor beschriebenen Ausführungsbeispielen unverlierbar im Hülsenteil 13 montiert ist.

## Patentansprüche

1. Einpassring zur Montage in Naben, insbesondere Naben elektrischer Maschinen, mit einem Hülsenteil (13) zur Aufnahme eines Lagers, **dadurch gekennzeichnet, dass** das Hülsenteil (13) so ausgebildet ist, dass ein Federelement (24) unverlierbar im Hülsenteil (13) montierbar ist.

2. Einpassring nach Anspruch 1, **dadurch gekennzeichnet, dass** das Hülsenteil (13) zumindest zwei Hinterschnitte (15) aufweist, die zum Halten des Federelement (24) dienen.

3. Einpassring nach Anspruch 2, **dadurch gekennzeichnet, dass** zumindest ein erster Hinterschnitt (19) durch eine Nut (18) gebildet ist.

4. Einpassring nach Anspruch 2, **dadurch gekennzeichnet, dass** zumindest ein zweiter Hinterschnitt (20) durch eine Nut ( 18) gebildet ist.

5. Einpassring nach Anspruch 2, **dadurch gekennzeichnet, dass** zumindest ein zweiter Hinterschnitt (20) durch einen Haken (22) gebildet ist.

6. Einpassring nach Anspruch 5, **dadurch gekennzeichnet, dass** der zumindest eine Haken (22) Teil einer Schnappverbindung ist.

7. Einpassring nach einem der Ansprüche 1 bis 6, **dadurch gekennzeichnet, dass** das Federelement (24) im Einpassring eingesetzt ist und dieses an seiner radialen Außenseite Zapfen (32) aufweist, durch die ein Verdrehen des Federelements (24) im Hülsenteil (13) verhindert wird.

8. Einpassring nach einem der vorstehenden Ansprüche, **dadurch gekennzeichnet, dass** das Federelement (24) in einer einzigen Position in das Hülsenteil (13) montierbar ist.

9. Einpassring nach einem der vorstehenden Ansprüche, **dadurch gekennzeichnet, dass** das Federelement (24) unverlierbar im Hülsenteil (13) montiert ist.
